# EUROPEAN PATENT APPLICATION

(11) **EP 4 723 717 A1**
(43) Date of publication of application: **08.04.2026**
(21) Application number: 23949090.7
(22) Date of filing: 19.12.2023
(51) Int. Cl.: H04W 24/02, H04W 24/08, H04W 24/10

(54) **REPORTING SUB-CONFIGURATION SELECTION METHOD AND APPARATUS, NETWORK DEVICE, TERMINAL, AND MEDIUM**

(30) Priority: 11.08.2023 CN 202311013889
(71) Applicant: China Telecom Corporation Limited Technology Innovation Center, Beijing 102209 (CN); China Telecom Corporation Limited, Beijing 100033 (CN)
(72) Inventor: YIN, Hang, Beijing 100033 (CN); ZHU, Jianchi, Beijing 100033 (CN); LI, Nanxi, Beijing 100033 (CN); SHE, Xiaoming, Beijing 100033 (CN)
(74) Representative: Murgitroyd & Company
(86) International application number: PCT/CN2023/139944
(87) International publication number: WO 2025/035674

(57) **Abstract**

A reporting sub-configuration selection method and apparatus, a network device, a terminal, and a medium, relating to the technical field of wireless communication. A channel state information reference signal measurement reporting sub-configuration selection method comprises, a base station sending a selection list of multiple channel state information (CSI) reporting sub- configuration s to the terminal, the selection list being used to select at least one of the multiple CSI reporting sub-configurations, so that the terminal can perform CSI measurement and reporting on the basis of the selected CSI reporting sub-configuration. By means of a technical solution of the present disclosure. indication and selection of a CSI-RS sub-configuration can be implemented, and selection of antenna port and transmitting power can be flexibly performed, which is beneficial for reducing the complexity and network overhead of measuring a reference signal by a user side, and improving the flexibility and reliability of CSI-RS measurement resource configuration.

## Description

### CROSS-REFERENCE TO RELATED APPLICATIONS

The present application claims priority to Chinese patent application No. 202311013889.2, filed on August 11, 2023, and entitled "REPORTING SUB-CONFIGURATION SELECTION METHOD AND APPARATUS, NETWORK DEVICE, TERMINAL, AND MEDIUM", the entire contents of which are incorporated herein by reference.

### TECHNICAL FIELD

The present disclosure relates to the field of wireless communication technologies, and in particular, to a method for selecting channel state information reference signal measurement reporting sub-configurations, an apparatus for selecting channel state information reference signal measurement reporting sub-configurations, a network device, and a computer-readable storage medium.

### BACKGROUND

Since the total energy consumption of 5G (5th Generation Mobile Communication Technology) networks is close to four times that of LTE (Long Term Evolution), there is an urgent need to reduce the overall energy consumption of 5G networks, and reducing the power of antennas is an important direction to reduce the overall energy consumption of the network.

By flexibly deactivating antenna ports and adjusting antenna transmit power, the power of antennas can be reduced to lower the network energy consumption for transmitting signals by base station. To achieve such flexible adjustment, it is necessary to correspondingly enhance the CSI (Channel State Information) feedback mechanism, and implement multiple CSI-RS (Channel State Information-Reference Signal) resource configurations in one CSI configuration for a UE (User Equipment) to perform measurements and reporting. However, reporting all the multiple CSI measurement results will affect the complexity and energy consumption of the UE.

It should be noted that the information disclosed in the background is only to facilitate the understanding of the background of the present disclosure, and thus may include information that does not constitute the prior art known to those of ordinary skill in the art.

### SUMMARY

An object of the present disclosure is to provide a method and apparatus for selecting channel state information reference signal measurement reporting sub-configurations, a network device, and a storage medium, so as to at least partially overcome the problem of increased complexity and energy consumption of the UE when all multiple CSI measurement results are reported in the related art.

Other features and advantages of the present disclosure will become apparent through the following detailed description, or will be partially learned through the practice of the present disclosure.

According to one aspect of the present disclosure, a method for selecting channel state information reference signal measurement reporting sub-configurations is provided, the method is applied to a base station and includes: transmitting a selection list of multiple channel state information (CSI) reporting sub-configurations to a terminal, where the selection list is used for selecting at least one of multiple CSI reporting sub-configurations, so that the terminal performs CSI measurements and reporting based on a selected CSI reporting sub-configuration.

In an embodiment, the multiple CSI reporting sub-configurations are configured based on a CSI reporting sub-configuration mechanism, and each configured CSI reporting sub-configuration corresponds to multiple channel state information reference signal (CSI-RS) resources with a same characteristic.

In an embodiment, the selection list includes at least one selection identifier, or the selection list records a value range of selection identifier, and the selection identifier is used for indicating the selected CSI reporting sub-configuration.

In an embodiment, the selection identifiers include sub-identifiers of the CSI reporting sub-configurations.

In an embodiment, the selection identifier includes a first sequence number obtained by sorting sub-identifiers of the CSI reporting sub-configurations.

In an embodiment, the sub-identifiers and the CSI reporting sub-configurations with a corresponding relationship are configured in a CSI report configuration in a Radio Resource Control (RRC) signaling.

In an embodiment, the same characteristic is that the multiple CSI-RS resources include a same number of antenna ports, and the selection list includes a first selection list; the first selection list includes at least one first selection identifier, and the first selection identifier is generated based on a selection of a number of antenna ports.

In an embodiment, generating the first selection identifier based on a selection of the number of antenna ports includes: sorting the multiple numbers of antenna ports corresponding to the multiple CSI reporting sub-configurations to obtain a second sequence number, the first selection identifier including the second sequence number.

In an embodiment, generating the first selection identifier based on the selection of the number of antenna ports includes that the first selection identifier includes the number of antenna ports.

In an embodiment, the same characteristic is that the multiple CSI-RS resources include a same transmit power offset value, the selection list includes a second selection list, the second selection list includes at least one second selection identifiers and the second selection identifier is generated based on a selection of the transmit power offset value.

In an embodiment, generating the second selection identifier based on the selection of the transmit power offset value includes: sorting the multiple transmit power offset values corresponding to the multiple CSI reporting sub-configurations to obtain a third sequence number, the second selection identifier including the third sequence number.

In an embodiment, generating the second selection identifier based on the selection of the transmit power offset value includes that the second selection identifier includes the transmit power offset value.

In an embodiment, transmitting the selection list of the multiple CSI reporting sub-configurations to the terminal includes: transmitting an RRC signaling to the terminal, the RRC signaling carrying the multiple CSI reporting sub-configurations and the selection list.

In an embodiment, after transmitting the RRC signaling to the terminal, the method further includes: transmitting a CSI trigger signaling to the terminal, so that the terminal performs the CSI measurements and reporting on the selected CSI reporting sub-configurations based on the CSI trigger signaling, where the CSI trigger signaling includes a Medium Access Control (MAC) Control Element (CE) and/or Downlink Control Information (DCI).

In an embodiment, transmitting the selection list of the multiple CSI reporting sub-configurations to the terminal includes: transmitting an RRC signaling to the terminal, the RRC signaling carrying the multiple CSI reporting sub-configurations; and sending a CSI trigger signaling to the terminal, so that the terminal performs the CSI measurements and reporting on the selected CSI reporting sub-configurations based on the CSI trigger signaling, the CSI trigger signaling carrying the selection list, and the CSI trigger signaling including a MAC CE and/or DCI.

According to another aspect of the present disclosure, a method for selecting channel state information reference signal measurement reporting sub-configurations is provided, the method is applied to a terminal and includes: receiving a selection list of multiple channel state information (CSI) reporting sub-configurations transmitted by a base station, where the selection list is used for selecting at least one of the multiple CSI reporting sub-configurations; and performing CSI measurements and reporting based on a selected CSI reporting sub-configuration.

In an embodiment, the multiple CSI reporting sub-configurations are configured based on a CSI reporting sub-configuration mechanism, each configured CSI reporting sub-configuration corresponds to multiple CSI-RS resources with a same characteristic, and receiving the selection list of multiple CSI reporting sub-configurations transmitted by the base station further includes: extracting the selection identifier or a value range of selection identifiers from the selection list; and selecting at least one of the multiple CSI reporting sub-configurations based on the selection identifier or the value range.

In an embodiment, the selection identifier includes a sub-identifier of the CSI reporting sub-configuration.

In an embodiment, the selection identifier include a first sequence number obtained by sorting sub-identifiers of the CSI reporting sub-configurations.

In an embodiment, receiving the RRC signaling transmitted by the base station further includes: extracting corresponding sub-identifiers and CSI reporting sub-configurations from the CSI report configurations in an RRC signaling; and determining the selected CSI reporting sub-configuration based on the sub-identifier selected by the selection list, to measure the CSI-RS resources corresponding to the CSI reporting sub-configuration.

In an embodiment, the same characteristic is that the multiple CSI-RS resources include a same number of antenna ports, and the selection list includes a first selection list; and at least one first selection identifier is extracted from the first selection list, the first selection identifier is the number of antenna ports, or the first selection identifier is a second sequence number generated by sorting the multiple numbers of antenna ports corresponding to the multiple CSI reporting sub-configurations.

In an embodiment, the same characteristic is that the multiple CSI-RS resources include a same transmit power offset value, and the selection list includes a second selection list; and the second selection list includes at least one second selection identifier, and the second selection identifier is the transmit power offset value, or the second selection identifier is a third sequence number generated by sorting the multiple transmit power offset values corresponding to the multiple CSI reporting sub-configurations.

In an embodiment, performing CSI measurements and reporting based on selected CSI reporting sub-configurations includes: taking the CSI-RS resources that satisfies both the first selection list and the second selection list as the CSI-RS resources corresponding to the selected CSI reporting sub-configuration.

In an embodiment, receiving the selection list of multiple CSI reporting sub-configurations transmitted by the base station includes: receiving an RRC signaling transmitted by the base station, the RRC signaling carrying the multiple CSI reporting sub-configurations and the selection list.

In an embodiment, after receiving the RRC signaling sent by the base station, the method further includes: receiving a CSI trigger signaling transmitted by the base station; and performing the CSI measurements and reporting on the selected CSI reporting sub-configuration based on the CSI trigger signaling, the CSI trigger signaling including a MAC CE and/or DCI.

In an embodiment, receiving the selection list of multiple CSI reporting sub-configurations transmitted by the base station includes: receiving an RRC signaling transmitted by the base station, the RRC signaling carrying the multiple CSI reporting sub-configurations; and receiving a CSI trigger signaling transmitted by the base station to perform the CSI measurements and reporting on the selected CSI reporting sub-configuration based on the CSI trigger signaling, the CSI trigger signaling carrying the selection list, and the CSI trigger signaling including a MAC CE and/or DCI.

According to another aspect of the present disclosure, an apparatus for selecting channel state information reference signal measurement reporting sub-configurations is provided, the apparatus is applied to a base station and includes: a transmitting module configured to transmit a selection list of multiple channel state information (CSI) reporting sub-configurations to a terminal, where the selection list is used for selecting at least one of the multiple CSI reporting sub-configurations, so that the terminal performs CSI measurements and reporting based on a selected CSI reporting sub-configuration.

According to another aspect of the present disclosure, an apparatus for selecting channel state information reference signal measurement reporting sub-configurations is provided, the apparatus is applied to a terminal and includes: a receiving module configured to receive a selection list of multiple channel state information (CSI) reporting sub-configurations transmitted by a base station, where the selection list is used for selecting at least one of the multiple CSI reporting sub-configurations; and a measurements and reporting module configured to perform CSI measurements and reporting based on the selected CSI reporting sub-configuration.

According to another aspect of the present disclosure, a network device is provided, including: a processor; and a memory configured to store executable instructions for the processor, where the processor is configured to execute the method for selecting channel state information reference signal measurement reporting sub-configurations according to the first aspect by executing the executable instructions.

According to another aspect of the present disclosure, a terminal is provided, including: a processor; and a memory configured to store executable instructions for the processor; where the processor is configured to execute the method for selecting channel state information reference signal measurement reporting sub-configurations according to the second aspect by executing the executable instructions.

According to another aspect of the present disclosure, a computer-readable storage medium is provided, on which a computer program is stored, and when the computer program is executed by a processor, the method for selecting channel state information reference signal measurement reporting sub-configurations according to any one of the above aspects is implemented.

According to the method for selecting channel state information reference signal measurement reporting sub-configurations provided by the embodiments of the present disclosure,, by setting a selection list, the selected reporting sub-configuration in the selection list is configured based on a configuration method, the configured CSI-RS resources are determined based on the selected reporting sub-configuration, and the CSI measurements and reporting are performed for the CSI-RS configuration in the CSI reporting sub-configuration or the sub-configuration composed of multiple CSI-RS resource configurations. This approach helps reduce the complexity and network overhead of reference signal measurement at the user end, and improves the flexibility and reliability of CSI-RS measurement resource configuration.

It should be understood that the above general description and the following detailed description are only exemplary and explanatory, and do not limit the present disclosure.

### BRIEF DESCRIPTION OF THE DRAWINGS

The accompanying drawings are incorporated into the specification and constitute a part of the specification, illustrate embodiments consistent with the present disclosure, and, together with the specification, serve to explain the principles of the present disclosure. Obviously, the drawings in the following description are only some embodiments of the present disclosure, and for those of ordinary skill in the art, other drawings can be obtained according to these drawings without creative labor.
FIG. 1 is a flowchart of a method for selecting channel state information reference signal measurement reporting sub-configurations in an embodiment of the present disclosure.
FIG. 2 is a flowchart of another method for selecting channel state information reference signal measurement reporting sub-configurations in an embodiment of the present disclosure.
FIG. 3 is a flowchart of yet another method for selecting channel state information reference signal measurement reporting sub-configurations in an embodiment of the present disclosure.
FIG. 4 is a flowchart of yet another method for selecting channel state information reference signal measurement reporting sub-configurations in an embodiment of the present disclosure.
FIG. 5 is a flowchart of yet another method for selecting channel state information reference signal measurement reporting sub-configurations in an embodiment of the present disclosure.
FIG. 6 is a schematic diagram of an apparatus for selecting channel state information reference signal measurement reporting sub-configurations in an embodiment of the present disclosure.
FIG. 7 is a schematic diagram of another apparatus for selecting channel state information reference signal measurement reporting sub-configurations in an embodiment of the present disclosure.
FIG. 8 is a block diagram of a structure of a computer device in an embodiment of the present disclosure.

### DETAILED DESCRIPTION OF THE EMBODIMENTS

Example embodiments will now be described more fully with reference to the accompanying drawings. However, example embodiments can be implemented in various forms and should not be construed as limited to the examples set forth herein. On the contrary, these embodiments make the present disclosure more comprehensive and complete, and fully convey the concept of example embodiments to those skilled in the art. The described features, structures, or characteristics can be combined in any suitable manner in one or more embodiments.

In addition, the accompanying drawings are only schematic illustrations of the present disclosure and are not necessarily drawn to scale. The same reference signs in the drawings denote the same or similar elements, and thus repeated descriptions thereof will be omitted. Some block diagrams in the drawings represent functional entities and do not necessarily correspond to physically or logically independent entities. These functional entities may be implemented in the form of software, or in one or more hardware modules or integrated circuits, or in different network and/or processor devices and/or microcontroller devices.

In the solution provided by the present disclosure, when data analysis of a target case report form is required, it determines that the target case report CSI-RS (Channel State Information-Reference Signal) is a very important reference signal in the 5G NR (New Radio) system. Wireless channel conditions may change continuously, and the terminal needs to feed back downlink channel conditions it observes to the base station through CSI (Channel State Information), so that the base station can take channel quality into account during downlink scheduling, flexibly deactivate antenna ports and adjust antenna transmit power. Channel Quality Indicator (CQI), Rank Indicator (RI), and Precoder Matrix Indicator (PMI) are collectively referred to as Channel State Information (CSI).

Since the energy consumption of 5G networks is higher than that of 4G networks, which affects the operating cost of 5G networks, it is necessary to reduce the energy consumption of 5G networks. By configuring multiple CSI resources simultaneously for measurement and reporting, and flexibly adjusting the antenna deactivation and transmit power, the energy consumption of base station antennas can be effectively reduced. However, when the terminal simultaneously performs the measurement and reporting of multiple CSIs, on one hand, it increases the complexity of the terminal, and on the other hand, it leads to a sharp increase in the overhead of reporting CSIs. To prevent such negative impacts, it is necessary to select the CSI resources for measurements and reporting.

Hereinafter, each step of the method for selecting channel state information reference signal measurement reporting sub-configurations in the exemplary embodiments of the present disclosure will be described in more detail with reference to the accompanying drawings.

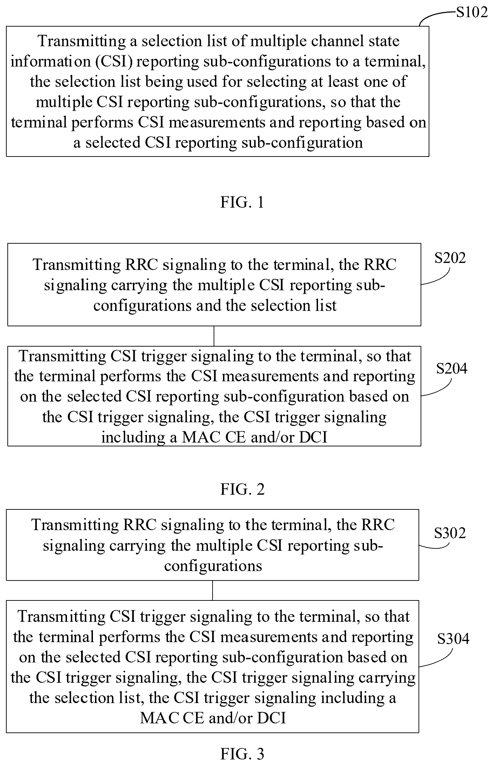

FIG. 1 shows a flowchart of a method for selecting channel state information reference signal measurement reporting sub-configurations in an embodiment of the present disclosure.

As shown in FIG. 1, according to the method for selecting channel state information reference signal measurement reporting sub-configurations provided by an embodiment of the present disclosure, the method for selecting channel state information reference signal measurement reporting sub-configurations applied to a base station includes step S102.

In step S102, a selection list of multiple channel state information (CSI) reporting sub-configurations is transmitted to a terminal. The selection list is used for selecting at least one of multiple CSI reporting sub-configurations, so that the terminal performs CSI measurements and reporting based on a selected CSI reporting sub-configuration.

The CSI reporting sub-configuration is used to configure reporting of at least one CSI-RS resource. A CSI sub-configuration refers to a set of CSI-RS resources with the same characteristic, which can be the same number of antenna ports or the same transmit power offset.

A selection method indicated in the selection list may directly indicate one or more CSI reporting sub-configurations, or indicate by limiting the range of sub-configurations. Assuming there are N CSI reporting sub-configurations, the selection list may include at most N indication identifiers, or a set of {n | X<=n<=Y}, indicating that the sub-configurations are enabled, and the corresponding configuration of the associated CSI-RS resources needs to be measured and reported by the UE.

In the embodiment, by setting a selection list, configuring the selected reporting sub-configuration in the selection list based on a configuration method, determining the configured CSI-RS resource based on the selected reporting sub-configuration, and performing CSI measurements and reporting for CSI-RS configurations in the CSI reporting sub-configuration or the sub-configuration composed of multiple CSI-RS resource configuration, the indication and selection of CSI-RS sub-configurations can be realized, antenna ports and transmit power can be flexibly selected, which helps reduce the complexity and network overhead of reference signal measurement at the user end, and improves the flexibility and reliability of CSI-RS measurement resource configuration.

In an embodiment, the multiple CSI reporting sub-configurations are configured based on a CSI reporting sub-configuration mechanism, and each configured CSI reporting sub-configuration corresponds to multiple channel state information reference signal (CSI-RS) resources with the same characteristic.

One reporting sub-configuration includes multiple CSI-RS resources, and a configuration of each CSI-RS resource exists only in one CSI reporting sub-configuration.

In an embodiment, the selection list includes at least one selection identifier, or the selection list records a value range of selection identifiers, and the selection identifieris used for indicating the selected CSI reporting sub-configuration.

In the embodiment, the selection identifier is configured in the selection list, the selection identifier is used for indicating the selected CSI reporting sub-configuration, so as to further determine the configured CSI-RS resource based on the CSI reporting sub-configuration, so that the terminal does not need to measure all configured CSI-RS resources, thereby reducing a network power consumption.

In an embodiment, the sub-identifiers and the reporting sub-configurations with a corresponding relationship are configured in a CSI report configuration in a Radio Resource Control (RRC) signaling.

In an embodiment, the selection identifier includes a sub-identifier of the CSI reporting sub-configuration.

A sub-identifier (sub-ID) is added to the RRC resource configuration for each reporting sub-configuration, and in this case, the sub-ID can be directly used as a selection identifier.

In the embodiment, when a certain sub-ID is in the list, it indicates that the corresponding reporting sub-configuration is enabled, and the corresponding configuration of the associated CSI-RS resources needs to be measured and reported by the UE, thereby ensuring the flexibility and reliability of selection.

In an embodiment, the selection identifier includes a first sequence number obtained by sorting sub-identifiers of the CSI reporting sub-configurations.

In the embodiment, to reduce a number of bits occupied by directly using the sub-ID, the sub-IDs are arranged and numbered in a certain manner, such as in ascending or descending order of the sub-IDs, to obtain the first sequence number as the selection identifier, and the corresponding sub-configuration can be known through the first sequence number.

In an embodiment, the same characteristic is that the multiple CSI-RS resources have the same number of antenna ports. The selection list includes a first selection list. The first selection list includes at least one first selection identifier, and the first selection identifier is generated based on a selection of the number of antenna ports.

Exemplarily, in an embodiment, a implementation method of generating the first selection identifier based on the selection of the number of antenna ports includes: sorting the multiple numbers of antenna ports corresponding to the multiple CSI reporting sub-configurations to obtain a second sequence number. The first selection identifier include the second sequence number.

In the embodiment, the sub-ID may not be configured for the CSI reporting sub-configuration, and in this case, the numbers of antenna ports may be directly sorted in ascending/descending order to obtain the second sequence number, which is directly used as the first selection identifier to select corresponding sub-configuration.

Exemplarily, in another embodiment, the implementation method of generating the first selection identifier based on a selection of the numbers of antenna ports includes that the first selection identifier includes the number of antenna ports.

The number of antenna ports of a CSI-RS resource may be a single antenna port or multiple antenna ports, up to 32 antenna ports. When mapping multiple antenna ports, CDM (Code Division Multiplexing) is used, i.e., multiple CSI-RS resources can be distinguished and mapped on a same time-frequency resource through CDM.

In the embodiment, for multiple CSI-RS resources configured to support different antenna ports, the CSI-RS resources corresponding to a same sub-configuration have a same number of ports, so the number of antenna ports associated with the sub-configuration can be used as its unique identifier, and filling in specific numbers of ports in the list can indicate different sub-configurations.

In addition, those skilled in the art can understand that besides adding the specific number of antenna ports in the list, the content of the list can also be modified to a value range of the number of ports, so that the sub-configuration whose number of antenna ports fall within the range can be indicated.

In an embodiment, the same characteristic is that the multiple CSI-RS resources have the same transmit power offset value, and the selection list includes a second selection list. The second selection list includes at least one second selection identifier, and the second selection identifier is generated based on a selection of the transmit power offset value.

In the embodiment, in a case that a CSI-RS resource includes multiple port numbers and transmit power offset values, the CSI reporting sub-configurations can be distinguished only by the numbers of ports. However, at this point, a transmit power offset can still be selected to help indicate a CSI-RS that ultimately needs to be measured and reported. Thus, the power offset of the CSI-RS to be selected can be directly chosen.

A transmit power offset list can reuse a field of the sub-configuration selection list that is based on transmit power.

In an embodiment, the multiple transmit power offset values corresponding to the multiple CSI reporting sub-configurations are sorted to obtain a third sequence number. The second selection identifier includes the third sequence number.

In an embodiment, the second selection identifier includes the transmit power offset value.

As shown in FIG. 2, in an embodiment, transmitting the selection list of the multiple CSI reporting sub-configurations to the terminal includes the following steps.

In step S202, RRC signaling is transmitted to the terminal, the RRC signaling carriying the multiple CSI reporting sub-configurations and the selection list.

In an embodiment, after transmitting the RRC signaling to the terminal, the method further includes step S204.

In step S204, a CSI trigger signaling is transmitted to the terminal, so that the terminal performs CSI measurements and reporting on the selected CSI reporting sub-configuration based on the CSI trigger signaling. The CSI trigger signaling includes a Media Access Control (MAC) control element (CE) and/or Downlink Control Information (DCI).

NR supports three reporting types: Periodic CSI (P-CSI), Semi-Persistent NZP-CSI (SP-CSI), and Aperiodic NZP-CSI (A-CSI). P-CSI is configured by an RRC signaling and does not need to be triggered, and after being configured by the RRC signaling, periodic measurements and reporting begins. The difference between SP-CSI and P-CSI is that the SP-CSI needs to be triggered. After basic information is configured by RRC signaling, periodic measurements and transmission begins only after receiving a trigger message from the gNB . Before receiving the trigger signaling, no reporting is required. As for A-CSI, it is reported once per trigger.

As shown in FIG. 3, in an embodiment, transmitting the selection list of multiple CSI reporting sub-configurations to the terminal includes steps S302 to S304.

In step S302, an RRC signaling is transmitted to the terminal, and the RRC signaling carries the multiple CSI reporting sub-configurations.

In step S304, a CSI trigger signaling is transmitted to the terminal, so that the terminal performs CSI measurements and reporting on the selected CSI reporting sub-configuration based on the CSI trigger signaling. The CSI trigger signaling carries the selection list. The CSI trigger signaling includes a MAC CE and/or DCI.

In the embodiment, which applies to Aperiodic CSI (A-CSI) and Semi-Persistent CSI (SP-CSI), a selection field may be located in the DCI or MAC CE that activates CSI reporting. Selectable values for this field are obtained automatically according to the CSI-RS resource configurations already configured in RRC.

When an ID of the sub-configuration is introduced, it should be configured together with the sub-configuration in the RRC configuration of the CSI report configuration.

When more dimensions of sub-configurations are introduced, the present disclosure is still applicable, but the sub-configurations based on the number of ports is still used as a selection benchmark, and other indication fields only further indicate the CSI-RS therein.

Even without the sub-configuration mechanism, selection can still be made directly based on the configuration in the present disclosure using the method provided in the present disclosure.

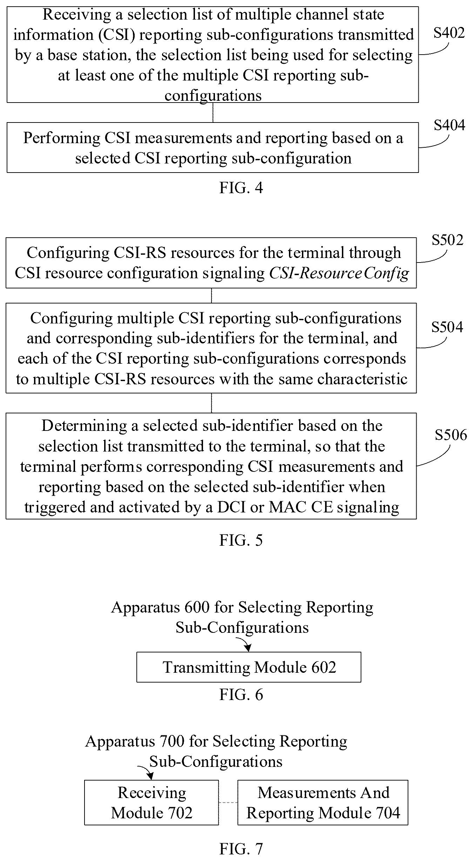

As shown in FIG. 4, according to another embodiment of the present disclosure, a method for selecting channel state information reference signal measurement reporting sub-configurations, applied to a terminal, includes steps S402 to S404.

In step S402, a selection list of multiple channel state information (CSI) reporting sub-configurations transmitted by a base station is received. The selection list is used for selecting at least one of the multiple CSI reporting sub-configurations.

In step S404, CSI measurements and reporting are performed based on a selected CSI reporting sub-configuration.

In the embodiment, by receiving the selection list configured by the base station, configuring the selected reporting sub-configuration in the selection list based on a configuration method, determining the configured CSI-RS resource based on the selected reporting sub-configuration, and performing CSI measurements and reporting for the CSI-RS configuration in the CSI reporting sub-configuration or the sub-configuration composed of multiple CSI-RS resource configurations, the indication and selection of CSI-RS sub-configurations can be realized, antenna ports and transmit power can be flexibly selected, which helps reduce the complexity and network overhead of measuring reference signals for the terminal.

In an embodiment, the multiple CSI reporting sub-configurations are configured based on a CSI reporting sub-configuration mechanism, each configured CSI reporting sub-configuration corresponds to multiple CSI-RS resources with the same characteristic, and receiving the selection list of multiple CSI reporting sub-configurations transmitted by the base station further includes: extracting the selection identifier or the value range of selection identifiers from the selection list, and selecting at least one of the multiple CSI reporting sub-configurations based on the selection identifier or the value range.

In an embodiment, the selection identifier includes a sub-identifier of the CSI reporting sub-configuration.

In an embodiment, the selection identifier includes a first sequence number obtained by sorting sub-identifiers of the CSI reporting sub-configurations.

In an embodiment, receiving an RRC signaling transmitted by the base station further includes: extracting corresponding sub-identifiers and CSI reporting sub-configurations from the CSI report configuration in the RRC signaling, and determining the selected CSI reporting sub-configuration based on the sub-identifier selected by the selection list, to measure the CSI-RS resource corresponding to the CSI reporting sub-configuration.

In an embodiment, the same characteristic is that the multiple CSI-RS resources have the same number of antenna ports, and the selection list includes a first selection list. At least one first selection identifier is extracted from the first selection list. The first selection identifier is the number of antenna ports, or the first selection identifier is a second sequence number generated by sorting the multiple numbers of antenna ports corresponding to the multiple CSI reporting sub-configurations.

In an embodiment, the same characteristic is that the multiple CSI-RS resources have the same transmit power offset value, and the selection list includes a second selection list. The second selection list includes at least one second selection identifier, and the second selection identifier is the transmit power offset value, or the second selection identifier is a third sequence number generated by sorting the multiple transmit power offset values corresponding to the multiple CSI reporting sub-configurations.

In an embodiment, performing CSI measurements and reporting based on the selected CSI reporting sub-configuration includes: taking the CSI-RS resource that satisfies both the first selection list and the second selection list as the CSI-RS resources corresponding to the selected CSI reporting sub-configuration.

Exemplarily, assuming there are three CSI reporting sub-configurations with selection identifiers: #0, #1, #2, corresponding to 16, 8, and 24 antenna ports, respectively. In this case, if the configuration information in a selection list is {#0, #1} or {16, 8}, and a power offset list is configured as {#0, #2} or {-3, 3}, it means that the sub-configurations with 16/8 ports are selected, but only the CSI-RSs with transmit power offset values set to 3/-3 need to be measured and reported, i.e., the CSI-RS resources that satisfies both the first selection list and the second selection list.

In an embodiment, receiving the selection list of multiple CSI reporting sub-configurations transmitted by the base station includes: receiving an RRC signaling transmitted by the base station, the RRC signaling carrying the multiple CSI reporting sub-configurations and the selection list.

In an embodiment, after receiving the RRC signaling transmitted by the base station, the method further includes: receiving CSI trigger signaling transmitted by the base station, and performing CSI measurements and reporting on the selected CSI reporting sub-configuration based on the CSI trigger signaling. The CSI trigger signaling includes a MAC CE and/or DCI.

In an embodiment, receiving the selection list of multiple CSI reporting sub-configurations transmitted by the base station includes: receiving an RRC signaling transmitted by the base station, the RRC signaling carrying the multiple CSI reporting sub-configurations, and receiving a CSI trigger signaling transmitted by the base station to perform CSI measurements and reporting on the selected CSI reporting sub-configuration based on the CSI trigger signaling, and the CSI trigger signaling carries the selection list. The CSI trigger signaling includes a MAC CE and/or DCI.

As shown in FIG. 5, according to another method for selecting channel state information reference signal measurement reporting sub-configurations of the present disclosure, the method includes steps S502 to S506.

In step S502, CSI-RS resources are configured for the terminal through CSI resource configuration signaling *CSI-ResourceConfig.*

In step S504, multiple CSI reporting sub-configurations and corresponding sub-identifiers are configured for the terminal, and each of the CSI reporting sub-configurations corresponds to multiple CSI-RS resources with the same characteristic.

In step S506, a selected sub-identifier is determined based on the selection list transmitted to the terminal, so that the terminal performs corresponding CSI measurements and reporting based on the selected sub-identifier when triggered and activated by a DCI or MAC CE signaling.

According to another embodiment of the present disclosure, a method for selecting channel state information reference signal measurement reporting sub-configurations is based on dynamic adjustment of antenna ports utilizing CSI feedback.

To realize dynamic adjustment of network antennas for energy saving, an enhanced CSI feedback mechanism is introduced. In the RRC configuration of CSI Resource configuration, within the CSI-RSResourceSet, two CSI-RS resources are respectively configured with 2 port numbers. For CSI-RS#1, the port numbers are {4, 8}; for CSI-RS#2, the ports are {8, 12}, forming a total of 3 sub-configurations as follows:
sub#1 (#port=4): {CSI-RS#1};
sub#2 (#port=8): {CSI-RS#1, CSI-RS#2};
sub#3 (#port=12): {CSI-RS#2}.

If triggered by MAC CE, the content in the list is {#2}, then only the CSI-RS configuration in sub#2 is required to be measured and reported.

According to another embodiment of the present disclosure, a method for selecting channel state information reference signal measurement reporting sub-configurations is based on joint dynamic adjustment of antenna ports and transmit power utilizing CSI feedback.

To realize dynamic adjustment of network antennas and power for energy saving, an enhanced CSI feedback mechanism is introduced. In the RRC configuration of CSI Resource configuration, within the CSI-RSResourceSet, one CSI-RS resource is configured with two CSI-RSs, corresponding to 32-port and 16-port CSI-RSs, and the adopted transmit power offsets are {1dB (#1), 3dB (#2)}. Another CSI-RS resource in the same set is also configured with one CSI-RS resource, corresponding to 16 ports, and the transmit power offset is 1dB (#1).

In this case, there are only two sub-configurations: sub#1 (#port=16): {CSI-RS#1, CSI-RS#2}; and sub#2 (#port=32): {CSI-RS#1}.

If triggered by MAC CE, a list indicating the number of ports is {#1}, and a list indicating the transmit power offset is {3}, then sub#1 is measured and reported, and only the CSI-RS resource with a transmit power offset equal to 3dB therein is measured, i.e., only the case where the transmit power offset of CSI-RS#1 is 3dB is measured and reported.

It should be noted that the above drawings are only schematic illustrations of the processes included in the methods according to the exemplary embodiments of the present disclosure, and are not intended to be limiting. It is easy to understand that the processes shown in the above drawings do not indicate or limit the time sequence of these processes. In addition, it is also easy to understand that these processes can be executed synchronously or asynchronously in multiple modules, for example.

An apparatus 600 for selecting channel state information reference signal measurement reporting sub-configurations according to an embodiment of the present disclosure will be described below with reference to FIG. 6. The apparatus 600 for selecting channel state information reference signal measurement reporting sub-configurations shown in FIG. 6 is only an example, and should not limit the functions and scope of use of the embodiments of the present disclosure.

The apparatus 600 for selecting channel state information reference signal measurement reporting sub-configurations is implemented as a form of a hardware module. Components of the apparatus 600 for selecting channel state information reference signal measurement reporting sub-configurations may include but are not limited to: a transmitting module 602 configured to transmit a selection list of multiple channel state information (CSI) reporting sub-configurations to a terminal, where the selection list is used for selecting at least one of the multiple CSI reporting sub-configurations, so that the terminal performs CSI measurements and reporting based on the selected CSI reporting sub-configuration.

An apparatus 700 for selecting channel state information reference signal measurement reporting sub-configurations according to an embodiment of the present disclosure will be described below with reference to FIG. 7. The apparatus 700 for selecting channel state information reference signal measurement reporting sub-configurations shown in FIG. 7 is only an example, and should not limit the functions and scope of use of the embodiments of the present disclosure.

The apparatus 700 for selecting channel state information reference signal measurement reporting sub-configurations is implemented as a form of a hardware module. The components of the apparatus 700 for selecting channel state information reference signal measurement reporting sub-configurations may include but are not limited to: a receiving module 702 configured to receive a selection list of multiple channel state information (CSI) reporting sub-configurations transmitted by a base station, where the selection list is used for selecting at least one of the multiple CSI reporting sub-configurations; and a measurements and reporting module 704 configured to perform CSI measurements and reporting based on the selected CSI reporting sub-configuration.

Those skilled in the art can understand that various aspects of the present disclosure can be implemented as a system, method or program product. Therefore, various aspects of the present disclosure can be specifically implemented in the following forms: a complete hardware implementation, a complete software implementation (including firmware, microcode, etc.), or a combination of hardware and software aspects, which can be collectively referred to as "circuit", "module" or "system".

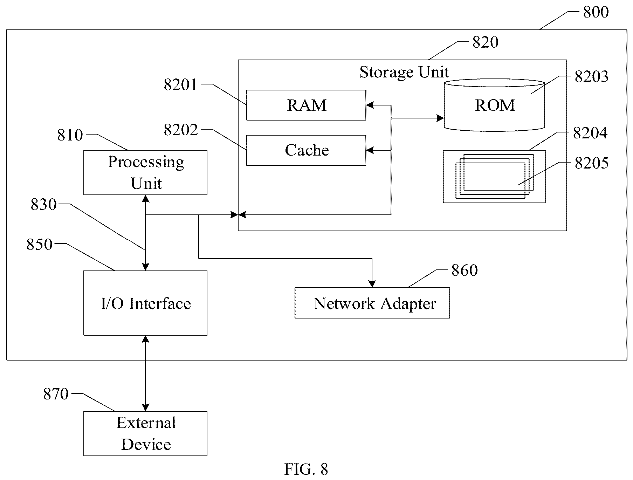

An electronic device 800 according to such an embodiment of the present disclosure will be described below with reference to FIG. 8. It may be a network device or a terminal. The electronic device 800 shown in FIG. 8 is only an example, and should not limit the functions and scope of use of the embodiments of the present disclosure.

As shown in FIG. 8, the electronic device 800 is implemented as a form of a general-purpose computing device. The components of the electronic device 800 may include but are not limited to: at least one processing unit 810, at least one storage unit 820, and a bus 830 connecting different system components (including the storage unit 820 and the processing unit 810).

The storage unit stores program codes, and the program codes can be executed by the processing unit 810, so that the processing unit 810 executes the steps described in the above "exemplary method" section according to various exemplary embodiments of the present disclosure. For example, the processing unit 810 can execute the scheme described in step S102 shown in FIG. 1.

The storage unit 820 may include a readable medium in the form of a volatile storage unit, such as a random access memory (RAM) 8201 and/or a cache memory 8202, and may further include a read-only memory (ROM) 8203.

The storage unit 820 may further include a program/utility tool 8204 having a set (at least one) of program modules 8205. Such program modules 8205 include but are not limited to: an operating system, one or more application programs, other program modules, and program data. Each of these examples or a certain combination may include the implementation of a network environment.

The bus 830 may represent one or more of several types of bus structures, including a storage unit bus or a storage unit controller, a peripheral bus, an accelerated graphics port, a processing unit, or a local bus using any of a variety of bus structures.

The electronic device 800 may also communicate with one or more external devices 870 (such as a keyboard, a pointing device, a Bluetooth device, etc.), and may also communicate with one or more devices that enable a user to interact with the electronic device 800, and/or with any device (such as a router, a modem, etc.) that enables the electronic device 800 to communicate with one or more other computing devices. Such communication may be performed through an input/output (I/O) interface 850. Moreover, the electronic device 800 may also communicate with one or more networks (such as a local area network (LAN), a wide area network (WAN), and/or a public network such as the Internet) through a network adapter 860. As shown in the Figures, the network adapter 860 communicates with other modules of the electronic device 800 through the bus 830. It should be understood that although not shown in the Figures, other hardware and/or software modules can be used in conjunction with the electronic device 800, including but not limited to: microcode, device drivers, redundant processing units, external disk drive arrays, RAID systems, tape drives, and data backup storage systems.

Through the description of the above embodiments, those skilled in the art can easily understand that the example embodiments described herein can be implemented by software, or by software combined with necessary hardware. Therefore, the technical solution according to the embodiments of the present disclosure can be embodied in the form of a software product, which can be stored in a non-volatile storage medium (which can be a CD-ROM, a U disk, a mobile hard disk, etc.) or on a network, and includes several instructions to enable a computing device (which can be a personal computer, a server, a terminal device, or a network device, etc.) to execute the method according to the embodiments of the present disclosure.

In an exemplary embodiment of the present disclosure, a computer-readable storage medium is also provided, on which a program product capable of implementing the method described above in this specification is stored. In some possible implementations, various aspects of the present disclosure can also be implemented in the form of a program product, which includes program code. When the program product runs on an electronic device, the program code is configured to enable the electronic device to execute the steps described in the above "exemplary method" section according to various exemplary embodiments of the present disclosure.

The program product for implementing the above method according to the embodiment of the present disclosure can adopt a portable compact disc read-only memory (CD-ROM) and include program code, and can run on an electronic device such as a personal computer. However, the program product of the present disclosure is not limited thereto. In the present disclosure, a readable storage medium can be any tangible medium that contains or stores a program, and the program can be used by or in combination with an instruction execution system, apparatus, or device.

The program product can adopt any combination of one or more readable media. The readable medium can be a readable signal medium or a readable storage medium. A readable storage medium may be, for example, but not limited to, an electrical, magnetic, optical, electromagnetic, infrared, or semiconductor system, apparatus, or device, or any combination thereof. More specific examples (a non-exhaustive list) of readable storage media include: an electrical connection with one or more wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

A computer-readable signal medium may include a data signal propagated in baseband or as part of a carrier wave, carrying readable program code. Such propagated data signals can take various forms, including but not limited to electromagnetic signals, optical signals, or any suitable combination thereof. A readable signal medium may also be any readable medium other than a readable storage medium, and the readable medium can send, propagate, or transmit a program for use by or in combination with an instruction execution system, apparatus, or device.

The program code contained on the readable medium can be transmitted using any appropriate medium, including but not limited to wireless, wired, optical cable, RF, etc., or any suitable combination thereof.

The program code for executing the operations of the present disclosure can be written in any combination of one or more programming languages. The programming languages include object-oriented programming languages such as Java and C++, and also include conventional procedural programming languages such as "C" or similar programming languages. The program code can be executed entirely on the user's computing device, partially on the user's device, as an independent software package, partially on the user's computing device and partially on a remote computing device, or entirely on the remote computing device or server. In the case of involving remote computing devices, the remote computing device can be connected to the user's computing device through any kind of network, including a local area network (LAN) or a wide area network (WAN), or can be connected to an external computing device (such as using an Internet service provider to connect through the Internet).

It should be noted that although the above detailed description refers to several modules or units for action execution, this division is not mandatory. In fact, according to the embodiments of the present disclosure, the features and functions of two or more modules or units described above can be embodied in one module or unit. Conversely, the features and functions of one module or unit described above can be further divided into multiple modules or units for implementation.

In addition, although the steps of the methods in the present disclosure are described in a specific order in the accompanying drawings, this does not require or imply that these steps must be executed in this specific order, or that all shown steps must be executed to achieve the desired results. Additionally or alternatively, some steps can be omitted, multiple steps can be combined into one step for execution, and/or one step can be split into multiple steps for execution. Through the description of the above embodiments, those skilled in the art can easily understand that the example embodiments described herein can be implemented by software, or by software combined with necessary hardware. Therefore, the technical solution according to the embodiments of the present disclosure can be embodied in the form of a software product, which can be stored in a non-volatile storage medium (which can be a CD-ROM, a U disk, a mobile hard disk, etc.) or on a network, and includes several instructions to enable a computing device (which can be a personal computer, a server, a mobile terminal, or a network device, etc.) to execute the method according to the embodiments of the present disclosure.

After considering the specification and practicing the invention disclosed herein, those skilled in the art will easily think of other embodiments of the present disclosure. The present disclosure is intended to cover any modifications, uses, or adaptive changes of the present disclosure. These modifications, uses, or adaptive changes follow the general principles of the present disclosure and include common knowledge or conventional technical means in the technical field not disclosed in the present disclosure. The specification and embodiments are only regarded as exemplary, and the true scope and spirit of the present disclosure are indicated by the appended claims.

## Claims

1. A method for selecting channel state information reference signal measurement reporting sub-configurations, applied to a base station, comprising:
transmitting a selection list of multiple channel state information (CSI) reporting sub-configurations to a terminal, wherein the selection list is used for selecting at least one of multiple CSI reporting sub-configurations, so that the terminal performs CSI measurements and reporting based on a selected CSI reporting sub-configuration.

2. The method for selecting channel state information reference signal measurement reporting sub-configurations according to claim 1, wherein the multiple CSI reporting sub-configurations are configured based on a CSI reporting sub-configuration mechanism, and each configured CSI reporting sub-configuration corresponds to multiple channel state information reference signal (CSI-RS) resources with a same characteristic.

3. The method for selecting channel state information reference signal measurement reporting sub-configurations according to claim 2, wherein the selection list comprises at least one selection identifier, or the selection list records a value range of selection identifiers, and the selection identifier is used for indicating the selected CSI reporting sub-configuration.

4. The method for selecting channel state information reference signal measurement reporting sub-configurations according to claim 3, wherein the selection identifier comprises a sub-identifier of the CSI reporting sub-configuration.

5. The method for selecting channel state information reference signal measurement reporting sub-configurations according to claim 3, wherein the selection identifier comprises a first sequence number obtained by sorting sub-identifiers of the CSI reporting sub-configurations.

6. The method for selecting channel state information reference signal measurement reporting sub-configurations according to claim 4, wherein the sub-identifiers and the CSI reporting sub-configurations with a corresponding relationship are configured in a CSI report configuration in a Radio Resource Control (RRC) signaling.

7. The method for selecting channel state information reference signal measurement reporting sub-configurations according to claim 3, wherein the same characteristic is that the multiple CSI-RS resources comprise a same number of antenna ports, and the selection list comprises a first selection list; and
the first selection list comprises at least one first selection identifier, and the first selection identifier is generated based on a selection of the number of antenna ports.

8. The method for selecting channel state information reference signal measurement reporting sub-configurations according to claim 7, wherein generating the first selection identifier based on a selection of the number of antenna ports comprises:
sorting the multiple numbers of antenna ports corresponding to the multiple CSI reporting sub-configurations to obtain a second sequence numbers, the first selection identifier comprising the second sequence number.

9. The method for selecting channel state information reference signal measurement reporting sub-configurations according to claim 7, wherein generating the first selection identifier based on a selection of the number of antenna ports comprises that the first selection identifier comprises the number of antenna ports.

10. The method for selecting channel state information reference signal measurement reporting sub-configurations according to claim 7, wherein the same characteristic is that the multiple CSI-RS resources comprise a same transmit power offset value, the selection list comprises a second selection list, the second selection list comprises at least one second selection identifier, and the second selection identifier is generated based on a selection of the transmit power offset value.

11. The method for selecting channel state information reference signal measurement reporting sub-configurations according to claim 10, wherein generating the second selection identifier based on the selection of the transmit power offset value comprises:
sorting the multiple transmit power offset values corresponding to the multiple CSI reporting sub-configurations to obtain a third sequence number, the second selection identifier comprising the third sequence number.

12. The method for selecting channel state information reference signal measurement reporting sub-configurations according to claim 10, wherein generating the second selection identifier based on the selection of the transmit power offset value comprises: the second selection identifier comprises the transmit power offset value.

13. The method for selecting channel state information reference signal measurement reporting sub-configurations according to any one of claims 1 to 12, wherein transmitting the selection list of the multiple CSI reporting sub-configurations to the terminal comprises:
transmitting an RRC signaling to the terminal, the RRC signaling carrying the multiple CSI reporting sub-configurations and the selection list.

14. The method for selecting channel state information reference signal measurement reporting sub-configurations according to claim 13, wherein after transmitting the RRC signaling to the terminal, the method further comprises:
transmitting a CSI trigger signaling to the terminal, so that the terminal performs the CSI measurements and reporting on the selected CSI reporting sub-configuration based on the CSI trigger signaling, the CSI trigger signaling comprising a Medium Access Control (MAC) Control Element (CE) and/or Downlink Control Information (DCI).

15. The method for selecting channel state information reference signal measurement reporting sub-configurations according to any one of claims 1 to 12, wherein transmitting the selection list of the multiple CSI reporting sub-configurations to the terminal comprises:
transmitting an RRC signaling to the terminal, the RRC signaling carrying the multiple CSI reporting sub-configurations; and
transmitting a CSI trigger signaling to the terminal, so that the terminal performs the CSI measurements and reporting on the selected CSI reporting sub-configuration based on the CSI trigger signaling, the CSI trigger signaling carrying the selection list, and the CSI trigger signaling comprising a MAC CE and/or DCI.

16. A method for selecting channel state information reference signal measurement reporting sub-configurations, applied to a terminal, comprising:
receiving a selection list of multiple channel state information (CSI) reporting sub-configurations transmitted by a base station, wherein the selection list is used for selecting at least one of the multiple CSI reporting sub-configurations; and
performing CSI measurements and reporting based on a selected CSI reporting sub-configuration.

17. The method for selecting channel state information reference signal measurement reporting sub-configurations according to claim 16, wherein the multiple channel state information reference signal (CSI-RS) reporting sub-configurations are configured based on a CSI reporting sub-configuration mechanism, each configured CSI reporting sub-configuration corresponds to multiple CSI-RS resources with a same characteristic, and receiving the selection list of multiple CSI reporting sub-configurations transmitted by the base station further comprises:
extracting the selection identifier or a value range of selection identifiers from the selection list; and
selecting at least one of the multiple CSI reporting sub-configurations based on the selection identifier or the value range.

18. The method for selecting channel state information reference signal measurement reporting sub-configurations according to claim 17, wherein the selection identifier comprises a sub-identifier of the CSI reporting sub-configuration.

19. The method for selecting channel state information reference signal measurement reporting sub-configurations according to claim 17, wherein the selection identifier comprises a first sequence number obtained by sorting sub-identifiers of the CSI reporting sub-configurations.

20. The method for selecting channel state information reference signal measurement reporting sub-configurations according to claim 18, further comprising:
extracting corresponding sub-identifiers and CSI reporting sub-configurations from the CSI report configurations in an RRC signaling transmitted by the base station; and
determining the selected CSI reporting sub-configuration based on the sub-identifier selected by the selection list, to measure the CSI-RS resources corresponding to the CSI reporting sub-configuration.

21. The method for selecting channel state information reference signal measurement reporting sub-configurations according to claim 17, wherein the same characteristic is that the multiple CSI-RS resources comprise a same number of antenna ports, and the selection list comprises a first selection list; and
at least one first selection identifier is extracted from the first selection list, the first selection identifier is the number of antenna ports, or the first selection identifier is a second sequence number generated by sorting the multiple numbers of antenna ports corresponding to the multiple CSI reporting sub-configurations.

22. The method for selecting channel state information reference signal measurement reporting sub-configurations according to claim 21, wherein the same characteristic is that the multiple CSI-RS resources comprise a same transmit power offset value, and the selection list comprises a second selection list, and
the second selection list comprises at least one second selection identifier, and the second selection identifier is the transmit power offset value, or the second selection identifier is a third sequence number generated by sorting the multiple transmit power offset values corresponding to the multiple CSI reporting sub-configurations.

23. The method for selecting channel state information reference signal measurement reporting sub-configurations according to claim 22, wherein performing the CSI measurements and reporting based on the selected CSI reporting sub-configuration comprises:
taking the CSI-RS resources that satisfies both the first selection list and the second selection list as the CSI-RS resources corresponding to the selected CSI reporting sub-configuration.

24. The method for selecting channel state information reference signal measurement reporting sub-configurations according to any one of claims 16 to 23, wherein receiving the selection list of multiple CSI reporting sub-configurations transmitted by the base station comprises:
receiving an RRC signaling transmitted by the base station, the RRC signaling carrying the multiple CSI reporting sub-configurations and the selection list.

25. The method for selecting channel state information reference signal measurement reporting sub-configurations according to claim 24, wherein after receiving the RRC signaling transmitted by the base station, the method further comprises:
receiving a CSI trigger signaling transmitted by the base station; and
performing the CSI measurements and reporting on the selected CSI reporting sub-configuration based on the CSI trigger signaling, the CSI trigger signaling comprising a MAC CE and/or DCI.

26. The method for selecting channel state information reference signal measurement reporting sub-configurations according to any one of claims 16 to 23, wherein receiving the selection list of multiple CSI reporting sub-configurations transmitted by the base station comprises:
receiving an RRC signaling transmitted by the base station, the RRC signaling carrying the multiple CSI reporting sub-configurations; and
receiving a CSI trigger signaling transmitted by the base station to perform the CSI measurements and reporting on the selected CSI reporting sub-configuration based on the CSI trigger signaling, the CSI trigger signaling carrying the selection list, and the CSI trigger signaling comprising a MAC CE and/or DCI.

27. An apparatus for selecting channel state information reference signal measurement reporting sub-configurations, applied to a base station, comprising:
a sending module configured to transmit a selection list of multiple channel state information (CSI) reporting sub-configurations to a terminal, wherein the selection list is used for selecting at least one of the multiple CSI reporting sub-configurations, so that the terminal performs CSI measurements and reporting based on a selected CSI reporting sub-configuration.

28. An apparatus for selecting channel state information reference signal measurement reporting sub-configurations, applied to a terminal, comprising:
a receiving module configured to receive a selection list of multiple channel state information (CSI) reporting sub-configurations sent by a base station, wherein the selection list is used for selecting at least one of the multiple CSI reporting sub-configurations; and
a measurements and reporting module configured to perform CSI measurements and reporting based on a selected CSI reporting sub-configuration.

29. A network device, comprising:
a processor; and
a memory configured to store executable instructions for the processor;
wherein the processor is configured to execute a method for selecting channel state information reference signal measurement reporting sub-configurations according to any one of claims 1 to 15 by executing the executable instructions.

30. A terminal, comprising:
a processor; and
a memory configured to store executable instructions for the processor;
wherein the processor is configured to execute the method for selecting channel state information reference signal measurement reporting sub-configurations according to any one of claims 16 to 26 by executing the executable instructions.

31. A computer-readable storage medium, on which a computer program is stored, wherein when the computer program is executed by a processor, the method for selecting channel state information reference signal measurement reporting sub-configurations according to any one of claims 1 to 26 is implemented.
